# EUROPEAN PATENT APPLICATION

(11) **EP 2 306 695 A1**
(43) Date of publication of application: **06.04.2011**
(21) Application number: 10306048.9
(22) Date of filing: 29.09.2010
(51) Int. Cl.: H04M 3/436

(54) **A method to provide a caller id in a telecommunication system**

(30) Priority: 30.09.2009 US 247553 P
(71) Applicant: France Telecom, 75015 Paris (FR)
(72) Inventor: Mourya, Manoj, FREMONT, CA 94539 (US); Catanzariti, Sergio, SAN FRANCISCO, CA 94132 (US)

(57) **Abstract**

The present invention discloses a method for providing a known caller identification (Caller ID) of a calling party to a called party over a telecommunication network, the method being carried out by a call control node of said telecommunication network, said call control node comprising a memory for storing a list of contacts for said called party, each contact being associated with at least a Caller ID and a corresponding voice sample for said contact, the method comprising acts of intercepting a first call from the calling party to the called party, when identifying that the called ID of the calling party does not belong to the list of contacts, prompting the calling party to provide a voice sample, recording the voice sample, searching in the stored list of contacts a voice sample of a first contact that matches the recorded voice sample, processing a second call to the second party when a voice sample of a first contact matches the recorded voice sample, using for said second call the Caller ID of said first contact, joining the first and second calls to generate a call between the calling party to the called party, thereby providing to said calling end point a Caller ID known from its list of contacts.

## Description

### FIELD OF THE PRESENT SYSTEM:

The present invention generally relates to communications using telecommunication devices in telecommunication networks, and more specifically to enhanced communications services.

### BACKGROUND OF THE PRESENT SYSTEM:

Telecommunication devices, such as mobile or landline phones, have become important devices in our daily life. A mobile phone or device is generally a subscriber to a telecommunication network in order to enjoy communication services, such as voice, data, etc. A mobile user may be identified using an International Mobile Subscriber Identity, or IMSI. The mobile IMSI is a unique number associated with all GSM (Global System for Mobile communications) and Universal Mobile Telecommunications System (UMTS) network mobile phone users. It is stored in the Subscriber Identity Module (SIM) inside the phone. The SIM is actually unique to one subscriber and carries information to identify that subscriber in his home network, i.e. the network he is a subscriber of. This information includes among other things the IMSI and further authentication data. The SIM is generally provided by the network operator when a user gets his subscription, and corresponds in this network to a unique MSISDN (Mobile Station International Subscriber Directory Number) which is actually the mobile device phone number in this network.

A landline, main line or fixed-line is a telephone line which travels through a solid medium, either metal wire or optical fiber. This is distinguished from a mobile cellular line mentioned here above, where the medium used is the airwaves. A landline telecommunication device can be a hardwired phone or a wireless phone, both connected to a base device itself connected to the PSTN (Public Switched Telephone Network). A landline device is also associated to a phone number in the PSTN.

When placing a call from a calling party to a called party (respectively named here after the caller and callee), the caller phone number may be presented to the callee device for identification of the caller. The caller phone number is generally referred to as the Caller Identification, Caller ID or CID in short. Presenting the Caller ID is a fairly recent service provided by most if not all network operators to their subscribers. For instance Caller ID presentation is a service offered by the PSTN today. CLIP (Calling Line Identification Presentation), a similar service offered for GSM mobile devices, is described in the document 3GPP (3rd Generation Partnership Project) TS23.081. Different solutions are available to transmit the caller ID information to the callee device, for instance an SS7 (Signaling System 7) message for PSTN lines or an SIP (Session Initiation Protocol) message setup in GSM and UMTS networks for Voice over IP.

Caller IDs, when referring to phone numbers either for landline or mobile telecommunication devices, are defined according to standardized numbers recommended by ITU-T (Telecommunication Standardization Sector) in the recommendation E.164 (Public telecommunication numbering plan). As they are unique to a given telecommunication device, they can be referred to as globally routable numbers, i.e. they can be dialed from any other telecommunication device to reach the given telecommunication device.

Today's devices allow the saving of large numbers of phone numbers in a contact list. To each entry of the contact list corresponds generally a number of fields describing a contact, for instance a phone number and a name. Additional fields such as address, birthday, emails, other phone numbers ... can also be stored for each entry/contact of the list. Most phones are adapted today to present/display a number of fields for a given entry, like a contact name, or even a contact picture, when identifying that an incoming Caller ID corresponds to the phone number field of a that given entry. The callee can perceive an enriched Caller ID for the caller as more fields than just a phone number are displayed. Therefore, one may distinguish:
- the incoming Caller ID, i.e. the phone number of the caller as provided by the network to the callee. Depending on the technology supporter by the network, more information may be comprised in the incoming Caller ID,
- the contact Caller ID, i.e. the contact information as presented to the callee by his device when matching the incoming Caller ID with (the phone number field of) an entry of the contact list. The contact Caller ID can be seen as a summary or snippet for this entry/contact, for instance its phone number, the contact name and a picture.

The Caller ID presentation can become problematic to the callee when a caller, whose (incoming) Caller ID is not known from the contact list, places a call to the callee device. A similar problem is encountered when the Caller ID of the calling device is blocked or hidden. In both instances, one can see the Caller ID of the caller as unknown, whether it is presented but unknown to the callee's contact list or unknown as not presented. The callee may not want to pick up the call but has not indication to know whether the call is important or not. Even if the caller is known from the callee, if the caller calls from a different device than his usual device (that is known from the contact list of the callee), the callee will not have an indication of the identity of the caller.

A number of solutions have been proposed to screen the unknown Caller IDs. US20030233231 discloses an apparatus and method for managing privacy using voice recognition and caller identification information. If a calling party calls from a device that does not have caller id information associated with it, or such caller id information is blocked, the calling party may record his/her voice identification with a privacy management service provider. The called party may then listen to the voice recording and decide whether to accept or reject the call. The voice print, or voice pattern, of the voice recording and the acceptance or rejection of the call may be stored in a storage device for later use in determining calls. At a later time, when the calling party again calls from his/her unidentifiable location, the calling party may again identify him/herself with a voice recording. The voice print from the voice recording may be extracted and compared to a library of voice prints for the called party. If the voice print matches a stored voice print, the corresponding identification of whether to accept or reject the call is retrieved. If the identification indicates acceptance of the call, the call is routed to the called party's telephone unit.

This known solution may offer an efficient screening to incoming calls with unknown Caller IDs, as callers associated to a voice print previously accepted will see their call go through to the callee. Nevertheless, the callee will only have the knowledge that the call is from a known person, or a person that he/she has talked to in the past. He still has no indication of the caller ID.

Today there is still a need for a simple solution that allows a called party to identify the caller of any incoming calls, even when the caller calls with a device unknown to the called party. There is a further need for a caller known from the callee's contact list to present his known Caller ID when calling from a different device.

### SUMMARY OF THE PRESENT SYSTEM AND METHOD:

It is an object of the present system, processor and method to overcome disadvantages and/or make improvements in the prior art.

To that extent, the present method proposes a method for providing a known caller identification (Caller ID) of a calling party to a called party over a telecommunication network, the method being carried out by a call control node of said telecommunication network, said call control node comprising a memory for storing a list of contacts for said called party, each contact being associated with at least a Caller ID and a corresponding voice sample for said contact, the method comprising acts of:
- intercepting a first call from the calling party to the called party, when identifying that the called ID of the calling party does not belong to the list of contacts,
- prompting the calling party to provide a voice sample,
- recording the voice sample,
- searching in the stored list of contacts a voice sample of a first contact that matches the recorded voice sample,
- processing a second call to the second party when a voice sample of a first contact matches the recorded voice sample, using for said second call the Caller ID of said first contact,
- joining the first and second calls to generate a call between the calling party to the called party, thereby providing to said calling end point a Caller ID known from its list of contacts.

Thanks to the present method, the called party will only receive calls with a presentation of a Caller ID. Any calls from a calling party with an unknown or blocked Caller ID will be rejected as not known from the called party contact list.

The present system also relates to call control node for providing a known caller identification (Caller ID) of a calling party to a called party over a telecommunication network, said call control node comprising a memory for storing a list of contacts for said called party, each contact being associated with at least a Caller ID and a corresponding voice sample for said contact, said call control node being arranged to:
- intercept a first call from the calling party to the called party, when identifying that the called ID of the calling party does not belong to the list of contacts,
- prompt the calling party to provide a voice sample,
- record the voice sample,
- search in the stored list of contacts a voice sample of a first contact that matches the recorded voice sample,
- process a second call to the second party when a voice sample of a first contact matches the recorded voice sample, using for said second call the Caller ID of said first contact,
- join the first and second calls to generate a call between the calling party to the called party, thereby providing to said calling end point a Caller ID known from its list of contacts.

The present system also relates to a telecommunication system comprising:
- a calling party,
- a called party,
- a telecommunication network,
- a call control node for providing a known caller identification (Caller ID) of the calling party to the called party over the telecommunication network, said call control node comprising a memory for storing a list of contacts for said called party, each contact being associated with at least a Caller ID and a corresponding voice sample for said contact, said call control node being arranged to:
- intercept a first call from the calling party to the called party, when identifying that the called ID of the calling party does not belong to the list of contacts,
- prompt the calling party to provide a voice sample,
- record the voice sample,
- search in the stored list of contacts a voice sample of a first contact that matches the recorded voice sample,
- process a second call to the second party when a voice sample of a first contact matches the recorded voice sample, using for said second call the Caller ID of said first contact,
- join the first and second calls to generate a call between the calling party to the called party, thereby providing to said calling end point a Caller ID known from its list of contacts.

The present system also relates to an application embodied on a computer readable medium and arranged to provide a known caller identification (Caller ID) of a calling party to a called party over a telecommunication network, the application being carried out by a call control node of said telecommunication network, said call control node comprising a memory for storing a list of contacts for said called party, each contact being associated with at least a Caller ID and a corresponding voice sample for said contact, the application comprising:
- instructions to intercept a first call from the calling party to the called party, when identifying that the called ID of the calling party does not belong to the list of contacts,
- instructions to prompt the calling party to provide a voice sample,
- instructions to record the voice sample,
- instructions to search in the stored list of contacts a voice sample of a first contact that matches the recorded voice sample,
- instructions to process a second call to the second party when a voice sample of a first contact matches the recorded voice sample, using for said second call the Caller ID of said first contact,
- instructions to join the first and second calls to generate a call between the calling party to the called party, thereby providing to said calling end point a Caller ID known from its list of contacts.

### BRIEF DESCRIPTION OF THE DRAWINGS:

The present system, call management node and method are explained in further detail, and by way of example, with reference to the accompanying drawings wherein:
   FIG. 1 shows an illustrative embodiment of the present system;
   FIG. 2 is a flow chart illustrating an embodiment of the present method;
   FIG. 3 shows a flow chart illustrating an exemplary embodiment of the collecting of voice samples; and,
   FIG. 4 is another illustrative embodiment of the present system.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, gateways or other entities in a telecommunication network are not detailed as their implementation is beyond the scope of the present system and method.

For purposes of simplifying a description of the present system, the terms "operatively coupled", "coupled", and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. For example, an operative coupling may include a wired and/or wireless coupling to enable communication between a call control node of a telecommunication network and one or more user devices. A further operative coupling, in accordance with the present system may include one or more couplings between two or more user devices, such as via a telecommunication network in accordance with an embodiment of the present system.

Unless specified otherwise, the exemplary embodiment here after will be described in its application to mobile devices characterized by a unique MSISDN (mobile phone number, i.e. the number through which the device can be reached) as provided by the Telecommunication Network (Telco) the users are subscribers of. Depending on the technologies supported by the Telco, the incoming Caller ID may comprise other information as well as, like postal address, email address, website, pictures, and additional phones numbers (other mobile phone, landline, work phone, ...). For simplification purposes, the incoming Caller ID will be limited here after, and unless specific otherwise, to the calling device phone number. This incoming Caller ID can be seen as the information about the calling device passed on by the network with the call to the called device. The contact Caller ID will correspond, as written before, to the contact fields presented to the callee by his device. When the incoming Caller ID cannot be found in the contact list, the contact Caller ID will generally correspond to the incoming Caller ID.

The present exemplary embodiment is in no way a limitation of the scope of the present method and system as telecommunication devices such as fixed devices of a PSTN, or communication devices behind a PBX (Private Branch exchange), may implement the present teachings. Variations to the present system will be detailed later on when one or both the parties involved in the call are not subscriber of the Telco implementing the present method.

Furthermore, what will be referred to as a "call" in this description may be a standard voice call or any other communication session established between a first party, referred to as the first user, calling party or caller, and another party referred to as the second user, calling party or callee. One will understand of course that the call is placed more precisely between the users telecommunication devices, i.e. the calling device and the called device, for instance a video call between the first and second users, or data exchange between devices. Each side of the call in the telecommunication network will be referred to as a branch or a leg of the call.

The call may also be referred to as a communication path between the two devices. When a communication path is set up between both calling and called devices, different entities of the present telecommunication system are involved and this path generally involves a two level exchange mechanism:
- a signaling level corresponding to the signaling (or set up) messages exchanges through the network entities between the two devices,
- a media level for handling data, voice, etc.

Furthermore, the calling and called devices will also be referred to as end points as they represent both ends to the communication path.

In addition, it should be expressly understood that the drawings are included for illustrative purposes and do not represent the scope of the present system.

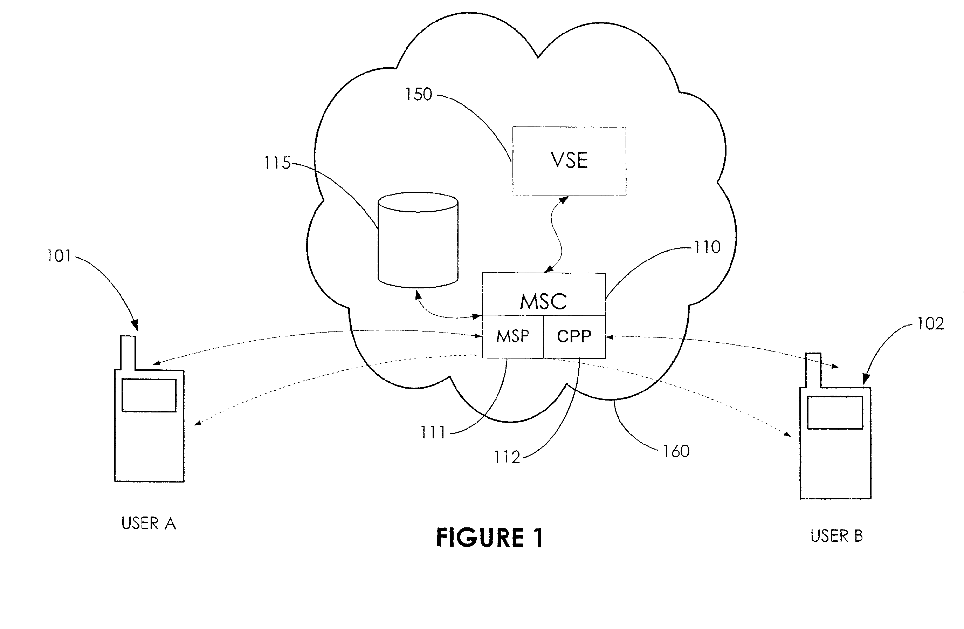

FIG. 1 shows an exemplary embodiment of the present system. A first telecommunication device, or first end point, 101 is illustrated as a mobile device comprising a SIM with information to identify itself in its network 160. The first device 101, belonging to a first user A, is further characterized by a first phone number NUM_A, which corresponds to its unique MSISDN. When placing a call, the first device is referred to as the calling device.

A second device 102 or second end point is also provided in the present network. When receiving the call, the second device will be referred to as the called device. The second device 102 belongs to a second user B and is further characterized by a second phone number NUM_B, which corresponds to its unique MSISDN. When a call is placed from user A to user B, user A is the caller while user B is the callee. The second device 102 further comprises a memory (not shown in FIG. 1) for storing a contact list, each entry comprising one ore more fields, such as a phone number, a contact name and other fields to describe the contact. The contact list will also be referred to as an address book in the following.

The present system also comprises a telecommunication network 160, or Telco, both users are subscribers of. One mobile switching center or node (MSC) 110 is provided to handle communications and other services between users of network 160. The MSC 110 of the present system may comprise two parts:
- a mobile switching part or MSP 111 to process calls between subscribers of the Telco 160, as needed in the present system,
- a Caller ID provisioning part or CPP 112 for providing a known Caller ID to any user B when receiving a call from a user A with an unknown incoming Caller ID. As described before, an incoming Caller ID is unknown to the callee when its an blocked Caller ID or when it does not match any "phone number" field of the contact list entries for the second device 102.

In the present description, MSP 111 and CPP 112 are illustrated as two separate parts of MSC 110. One may note that illustrating the two entities 110 and 112 as separate parts is in no way limiting as these two parts could be hosted by the same node or server, like MSC 110. One may also note that the present method may be implemented by a node of Telco 160 distinct from MSC 110, and rely upon MSC capacities for call controls.

A database or memory 115 is associated to MSC 110 for storing information about subscribers of Telco 160, and more specifically about users A and B. In the present system, database 115 may store a network address book, or NAB, for user B. This NAB comprises a copy of the second device contact list as explained later on. The NAB thus comprises a number of entries, one per contact, each contact being described by the same fields used in the contact list of the second device 102.

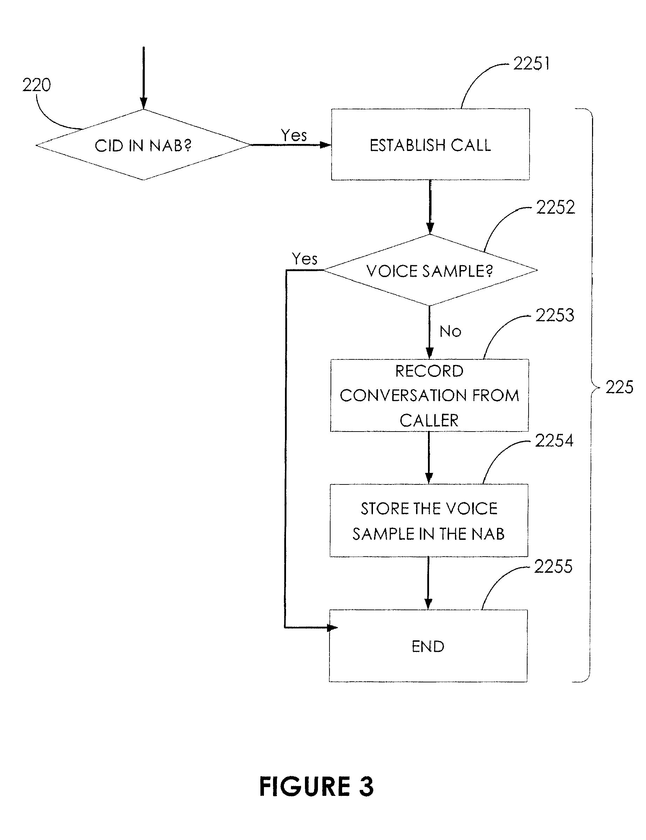

In the present system, the NAB may comprise for each entry one additional field corresponding to a voice sample of the person corresponding to the contact. Various techniques may be used to provide the voice samples as will be detailed later on in relation to FIGs. 3A and 3B.

The present system may also comprise a Voice Synthesizer Engine 150 or VSE for , operatively connected to MSC 110, for comparing the voice of the caller A to the voice samples in the NAB as explained here after.

Having in mind the limitations of the known solutions, it could be of interest to user B to see a Caller ID for any uncoming call. This service or feature allowing an enhanced Caller ID presentation, and facilitated by the present method, may be offered by Telco 160 to its users upon, for instance, registration. To that effect, user B may register in the present system with MSC 110 to benefit from this enhanced Caller ID presentation.

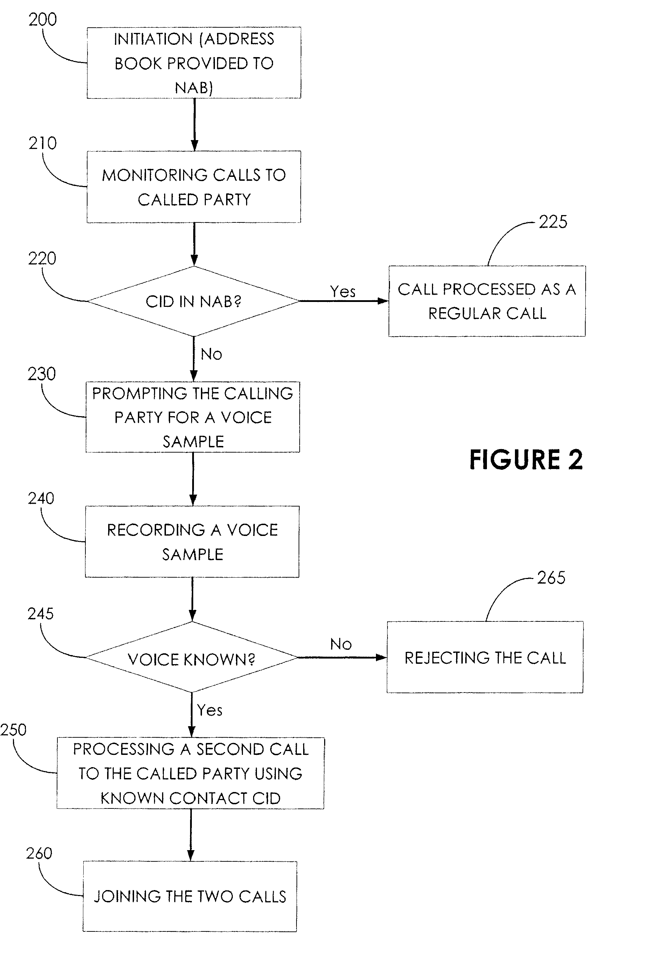

FIG. 2 is a flow chart illustrating an exemplary embodiment of the present method, wherein the first device places a call with an unknown Caller ID to the second device. The present method will be described as implemented by the MSC 110, through the MSP 111 and CPP 112 parts.

In a preliminary act 200, user B registers with the MSC 110 to benefit from the enhanced Caller ID presentation feature of the present system. He ma registers one or more devices. Let us assume that he registers his mobile phone, i.e. the second device 102 of FIG. 1. Upon registration, and through regular updates, his contact list stored on his registered second device 102 is sent to the MSC 110, more specifically to the CPP 112. The CPP 112 will update the stored NAB for user B with any update from the previously stored NAB.

Various embodiments exist for the NAB update, either based on a push or pull from the second device 102 or the CPP 112. Furthermore, only the updates, i.e. any modification, suppression or additions of entries may be provided to the CCP 112 to limit the impact on the second device power resources. Any known techniques may be used by the man skilled in the art and are beyond the scope of the present method. Provided the incoming Caller ID is limited to a phone number, only the name and one or more phone numbers may be needed for the NAB.

Table 1 is an exemplary illustration of the NAB stored in database 115 of the MSC 110. A registered user to the enhanced Caller ID presentation feature may be identified by his phone number in Telco 160. Each line may correspond to a contact, and will comprise different fields such as the name, and one or more phone numbers for that contact. A voice sample field is also provided as mentioned before

**Table 1: User B NAB stored by the Telco**

| Registered user | Contact name | Contact Caller ID 1 | Contact Caller ID 2 | Voice sample |
|---|---|---|---|---|
| NUM_B | Contact 1 | NUM_A1 | NUM_A1a | Yes |
| | Contact 2 | NUM_A2 | NUM_A2a | Yes |
| | Contact 3 | NUM_A3 | | Yes |
| | Contact 4 | NUM_A4 | | No |
| | Contact 5 | NUM_A5 | NUM_A5a | Yes |

In a further act 210, MSC 110 will monitor any incoming call for the second user B. MSC 110 will intercept the incoming Caller ID corresponding to the calling device 101 placing the incoming call, or first call. MSC 110 will compare this Caller ID, in the present illustration user A phone number, to the phone number fields of user B NAB. Provided the Caller ID matches one field of the user B NAB, the incoming Caller ID is considered as known to user B (answer Yes to act 220) and the call can be processed as a regular call in a further act 225. For instance the incoming Caller ID will be compared to the second device list of contacts and the corresponding contact Caller ID will be displayed to the user B.

As explained before, a blocked number, a call with unknown incoming Caller ID or an incoming Caller ID not found in the NAB will all generate a No answer to act 220. In other words, for such examples, the incoming Caller ID will not be found in the network address book NAB. In this case the incoming call or first call is not processed as a regular call to user B. This call can be seen as intercepted by MSC 110. Following an answer No to act 220, the MSC 110 prompts the caller, for instance using VSE 150, to provide a voice sample in a further act 230. MSC will then wait for the caller A to provide such a voice sample and will record it in a subsequent act 240.

In the exemplary embodiment of the present method, we assume that voice samples are already available, i.e. stored, for each entry in the user B NAB. Using the VSE 150, the MSC 110 searched in the stored NAB the voice sample of a first contact, i.e. of a first entry, that matches the recorded voice sample from the caller. In other words, the MSC 110 will try to identify an existing contact in user B NAB that corresponds to the caller's voice. Voice recognition techniques may be used to compare the voice samples. For instance, solutions like Zehu Authenticator™ from Zehu Technologies may be used to find a match between the recorded voice sample and the stored ones. This Authenticator is a biometric verification platform that uses a voice biometric technology for real time verification of a person's voice sample. By matching the recorded voice sample to a mathematical voice model for each voice sample stored for each contact, this tool can return a highly accurate match within seconds. As several such tools are available today, discussion on a right voice recognition technique is beyond the scope of the present application.

Provided no voice sample of any contact of the NAB matches the recorded voice sample from the caller A, i.e. that the caller A cannot be identified (answer No to act 245), the call will be rejected in a further act 265. Thus the user B does not get to be disturbed by an unwanted call from blocked Caller ID, an unknown Caller ID or a number he is not familiar with.

Alternatively to act 265 (not shown in FIG. 2), the call may still be processed to the called party, with an unknown Caller ID, and it will up to the called party, to pick up the call or not. Additionally, the called party may configured his telecommunication device to handle such calls with unknown incoming Caller ID in a predefined way. For instance, user B may configure his device to reject such incoming calls during certain periods of the day, when he does not want to be disturbed. To implement this alternative embodiment to act 265 of FIG. 2, the call control node will be configured to still process to the user B a call with an unknown Caller ID, even through the caller A cannot be identified in act 245.

When a voice sample from a first contact in the NAB matches the recorded voice sample from caller A, then the caller A has been identified as this first contact, i.e. a known contact (answer Yes to act 245). The provision of a known Caller ID can continue in a further act 250 wherein the MSC 110 will process a second call to the callee using for this second call the Caller ID of the first contact. In other words, as a phone number is available for this identified first contact in the NAB, this phone number is used by MSC 110 as the phone number from which originates the second call to the user B.

The intercepted first call can be seen as a first leg of a communication between the caller A and the callee B, while the second call can be seen as a second leg of that communication. These two legs are illustrated in dotted lines in FIG. 2. In a further act 260, the MSC 110 will join the two calls to generate a communication path (dashed line in FIG. 2) between the first and second devices, i.e. the caller and the callee. As the second device is presented with a known phone number as the origin of the call, it will display the contact Caller ID corresponding to that phone number since the NAB and the device contact list for user B comprise the same contacts.

Using the illustration of Table 1, let's assume that user B is registered with the present enhanced Caller ID presentation. A copy of his device contact list is stored in database 115, and further comprise for some entries a voice sample. For instance, for the caller A1, whose name is Contact 1, a voice sample is present. When the caller A1 calls user B from a different phone than his listed phones (NUM_A1 and NUM_A1a) in user B NAB, he will be prompted to provide a voice sample. Indeed, whether is phone number is unknown, blocked or not found in the user NAB, the prompt of act 2230 will be triggered following an answer no to act 220 (incoming Caller ID not found in NAB). His voice sample will be compared to the stored voice samples in the NAB. As his voice sample is known from the "contact 1" entry in the user B NAB (answer Yes to act 245), the MSC 110 will process a second call to user B using for instance NUM_A1 as the incoming Caller ID for that second call. One may note that MSC 110 could as well use the other phone number known for "contact 1" in Table 1. Indeed, both are registered under the same contact name in both the NAB and the second device contact list. Therefore, the second device will certainly present the contact name, and even a picture as the contact Caller ID when receiving the second call. Even if the incoming phone number is presented to the user B, he is likely to be more responsive to the contact's name "contact 1" than to the display of either phone numbers NUM_A or NUM_A1.

FIG. 3 is an illustration of an exemplary embodiment of the voice sample collecting that enables the present method. Provided the incoming Caller ID is considered as known to user B (answer Yes to act 220), the call would normally be processed as a regular call in a further act 225. Nevertheless, a voice sample may not be available for some contacts of the user B NAB. For instance in the exemplary illustration of Table 1, the user B NAB does not have a voice sample of "contact 4". In an alternative embodiment of the present method, the act 225 may comprise additional acts 2251 to 2255 for storing a voice sample for this contact 4. Once the call is established in the act 2251, i.e. that the caller and the callee can carry on a conversation, the MSC will check in the Network Address Book if a voice sample is available for the caller A. Provided it is (answer Yes to act 2252), for instance for the contact 1, contact 2, contact 3 and contact 5 of Table 1, the collecting will end in a further act 2255.

If the voice sample is not available (answer No to act 2252), the MSC 110 will proceed with recording a voice sample from the user A conversation in a subsequent act 2253. Once a voice sample is recorded for the user A, for instance "contact 4" in the illustration of Table 1, the voice sample field for that contact will be filed with the recorded voice sample. The collecting of the voice sample will end in a further act 2255 and Table 1 will come Table 2:

**Table 2: Updated user B NAB stored by the Telco**

| Registered user | Contact name | Contact Caller ID 1 | Contact Caller ID 2 | Voice sample |
|---|---|---|---|---|
| NUM_B | Contact 1 | NUM_A1 | NUM_A1a | Yes |
| | Contact 2 | NUM_A2 | NUM_A2a | Yes |
| | Contact 3 | NUM_A3 | | Yes |
| | Contact 4 | NUM_A4 | | Yes |
| | Contact 5 | NUM_A5 | NUM_A5a | Yes |

The Another way to provide a voice sample would be by directly recording a contact voice sample when creating the new entry on the device contact list. For instance, a user B wants to ad a new contact to his contact list as the person in front of him gives him his name and phone numbers or passes through Bluetooth® his contact information. A client may be present on the user B device to record a voice sample and associate it directly with the contact. This client may be downloaded from the MSC 110 upon registration of user B to the enhanced Caller ID presentation feature. This client may be for instance adapted to ad a voice sample field to a contact entry in the device contact list. Once the new contact is created, user B will ask for the contact provide a voice sample. He will activate the client prior to the recording and the voice sample will be automatically associated to the contact that user B designates. The same client could be used for any existing contact that were available prior to the registration of user B to the enhanced Caller ID presentation feature of the present system.

As mentioned earlier, the Caller ID is generally the MSISDN associated to this IMSI. Depending on the type of telecommunication network the Caller ID could be a different identifier for the calling device. It could be for instance metadata associated to the user, like a picture or detailed information about this user such as a name and address, depending on the possibility offered by the network as well as the consent of the user. For such networks, the second call will be processed by the MSC 110 using the whole Caller ID of the found first contact, or part of it, as the incoming Caller ID. For instance, the incoming Caller ID could be the contact name, that will be presented to the callee upon receiving the second call.

In the hereabove illustrations, telecommunication devices 101 and 102 were illustrated as mobile devices, such as PDAs, cellular phones, smart phones and the likes. The present teachings can be readily implemented with either one, or both, of the first and second telecommunication devices being a landline phone.

In the present illustration, MSC 110 is a node from Telco 160 implementing the present method. One may note that MSC 110 may comprise one or more parts and that illustrating the MSC 110 as comprising one part is in no way limiting as these more parts could be hosted by one or more other nodes or servers of Telco 160, these parts being operatively coupled to each other. In accordance with a further embodiment of the present system, another coupled node other than MSC 110 in Telco 160 may readily implement the method according to the present system, provided it can intercept the first call, process the second call and join these two calls. Such a node or the MSC, when implementing the present method may be both seen as Call Control Nodes implementing the enhance Caller ID presentation feature.

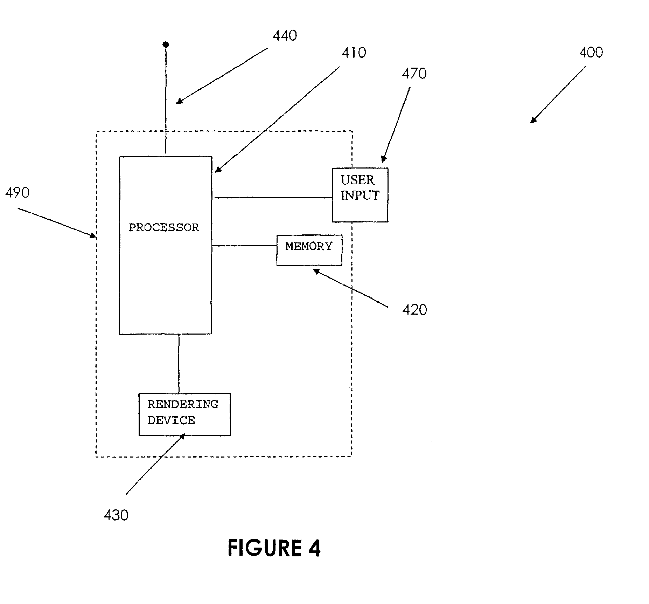

FIG. 4 shows a system 400 in accordance with an embodiment of the present system. The system 400 includes a service node or call control node 490 hosting the present enhanced Caller ID presentation service. Service node 490 has a processor 410 operationally coupled to a memory 420, a rendering device 430, such as one or more of a display, speaker, etc., a user input device 470, such as a sensor panel, a keyboard, trackball and the likes, and a connection 440 operationally coupled to other entities and nodes of Telco 160 (not shown in FIG. 4). The connection 440 may be an operable connection between the service node 490 and another node, server or device that has similar elements as service node 490, such as the telecommunication device of the caller or callee in the present system.

The memory 420 may be any type of device for storing for instance the application data related to the operating system of the service node, as well as to application data in accordance with the present method. The application data are received by the processor 410 for configuring the processor 410 to perform operation acts in accordance with the present system. The operation acts include:
- intercepting a first call to the called party, when identifying that the called ID of the calling party does not belong to the list of contacts,
- prompting the calling party to provide a voice sample,
- recording the voice sample,
- searching in the stored list of contacts a voice sample of a first contact that matches the recorded voice sample,
- processing a second call to the second party when a voice sample of a first contact matches the recorded voice sample, using for said second call the Caller ID of said first contact,
- joining the first and second calls to generate a call between the calling party to the called party, thereby providing to said calling end point a Caller ID known from its list of contacts.

The user input 470 may include a sensor panel as well as a keyboard, mouse, trackball, touchpad or other devices, which may be stand alone or be a part of a system, such as part of a personal computer (e.g., desktop computer, laptop computer, etc.) personal digital assistant, mobile phone, converged device, or other rendering device for communicating with the processor 410 via any type of coupling, such as a wired or wireless coupling. The user input device 470 is operable for interacting with the processor 410 including interaction within a paradigm of a GUI and/or other elements of the present system, such as to enable entry of data by an operator.

Clearly the service node 490, the processor 410, memory 420, rendering device 430 and/or user input device 470 may all or partly be portions of a computer system or other device, and/or be embedded in one or more servers.

The system, device and method described herein address problems in prior art systems. In accordance with an embodiment of the present system, the telecommunication device 102 may register with the service node 490 to enjoy an enhanced Caller ID presentation service in accordance with the present system. As may be readily appreciated, one or more of the user devices (i.e., first device 101, second device 102) may also include a corresponding processor, memory, rendering device, user input device and operable coupling as the service node 490 and as such, the description of operation, etc. of the service node 490 should be understood to encompass a description of illustrative operable portions of the users devices, suitably coupled and configured for operation in accordance with the present system.

The methods of the present system are particularly suited to be carried out by a computer software program, such program containing modules corresponding to one or more of the individual steps or acts described and/or envisioned by the present system. Such program may of course be embodied in a computer-readable medium, such as an integrated chip, a peripheral device or memory, such as the memory 420 or other memory coupled to the processor 410.

The computer-readable medium and/or memory 420 may be any recordable medium (e.g., RAM, ROM, removable memory, CD-ROM, hard drives, DVD, floppy disks or memory cards) or may be a transmission medium utilizing one or more of radio frequency (RF) coupling, Bluetooth coupling, infrared coupling, etc. Any medium known or developed that can store and/or transmit information suitable for use with a computer system may be used as the computer-readable medium and/or memory 420.

Additional memories may also be used. These memories configure processor 410 to implement the methods, operational acts, and functions disclosed herein. The operation acts may include controlling the rendering device 430 to render elements in a form of a GUI and/or controlling the rendering device 430 to render other information in accordance with the present system.

Moreover, the term "memory" should be construed broadly enough to encompass any information able to be read from or written to an address in the addressable space accessed by a processor. With this definition, information on a network is still within memory 420, for instance, because the processor 410 may retrieve the information from the network for operation in accordance with the present system. For example, a portion of the memory like database 115 as understood herein may reside on different nodes of the telecommunication network.

The processor 410 is capable of performing operations in response to incoming confirmation messages and first calls and executing instructions stored in the memory 420. The processor 410 may be an application-specific or general-use integrated circuit(s). Further, the processor 410 may be a dedicated processor for performing in accordance with the present system or may be a general-purpose processor wherein only one of many functions operates for performing in accordance with the present system. The processor 410 may operate utilizing a program portion, multiple program segments, or may be a hardware device utilizing a dedicated or multi-purpose integrated circuit.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow. Further, while exemplary user interfaces are provided to facilitate an understanding of the present system, other user interfaces may be provided and/or elements of one user interface may be combined with another of the user interfaces in accordance with further embodiments of the present system.

The section headings included herein are intended to facilitate a review but are not intended to limit the scope of the present system. Accordingly, the specifications and drawings are to be regarded in an illustrative manner and are not intended to limit the scope of the appended claims.

In interpreting the appended claims, it should be understood that:
a) the words "comprising" or "including" do not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analogue and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for providing a known caller identification (Caller ID) of a calling party (101) to a called party (102) over a telecommunication network (160), the method being carried out by a call control node (110) of said telecommunication network, said call control node comprising a memory (115) for storing a list of contacts for said called party, each contact being associated with at least a Caller ID and a corresponding voice sample for said contact, the method comprising acts of:
- intercepting a first call from the calling party to the called party, when identifying that the called ID of the calling party does not belong to the list of contacts,
- prompting the calling party to provide a voice sample,
- recording the voice sample,
- searching in the stored list of contacts a voice sample of a first contact that matches the recorded voice sample,
- processing a second call to the second party when a voice sample of a first contact matches the recorded voice sample, using for said second call the Caller ID of said first contact,
- joining the first and second calls to generate a call between the calling party to the called party, thereby providing to said calling end point a Caller ID known from its list of contacts.

2. The method of claim 1 further comprising the acts of:
- processing the first call when identifying that the called ID of the calling party corresponds to a second contact of the list of contacts,
- recording a voice sample from the calling party during the first call if no voice sample is stored in the list of contacts for said second contact,
- storing the recorded voice sample in association with the second contact in the list of contacts,

3. The method of one of the previous claims, further comprising the preliminary act of receiving the list of contacts from the called party.

4. A call control node (110) for providing a known caller identification (Caller ID) of a calling party (101) to a called party (102) over a telecommunication network (160), said call control node comprising a memory (115) for storing a list of contacts for said called party, each contact being associated with at least a Caller ID and a corresponding voice sample for said contact, said call control node being arranged to:
- intercept a first call from the calling party to the called party, when identifying that the called ID of the calling party does not belong to the list of contacts,
- prompt the calling party to provide a voice sample,
- record the voice sample,
- search in the stored list of contacts a voice sample of a first contact that matches the recorded voice sample,
- process a second call to the second party when a voice sample of a first contact matches the recorded voice sample, using for said second call the Caller ID of said first contact,
- join the first and second calls to generate a call between the calling party to the called party, thereby providing to said calling end point a Caller ID known from its list of contacts.

5. The call control node of claim 4 further arranged to:
- process the first call when identifying that the called ID of the calling party corresponds to a second contact of the list of contacts,
- record a voice sample from the calling party during the first call if no voice sample is stored in the list of contacts for said second contact,
- store the recorded voice sample in association with the second contact in the list of contacts,

6. The method of one of the previous claims 4 and 5, further arranged to receive the list of contacts from the called party.

7. A telecommunication system comprising:
- a calling party (101),
- a called party (102),
- a telecommunication network (160),
- a call control node (110) for providing a known caller identification (Caller ID) of the calling party to the called party over the telecommunication network, said call control node comprising a memory (115) for storing a list of contacts for said called party, each contact being associated with at least a Caller ID and a corresponding voice sample for said contact, said call control node being arranged to:
- intercept a first call from the calling party to the called party, when identifying that the called ID of the calling party does not belong to the list of contacts,
- prompt the calling party to provide a voice sample,
- record the voice sample,
- search in the stored list of contacts a voice sample of a first contact that matches the recorded voice sample,
- process a second call to the second party when a voice sample of a first contact matches the recorded voice sample, using for said second call the Caller ID of said first contact,
- join the first and second calls to generate a call between the calling party to the called party, thereby providing to said calling end point a Caller ID known from its list of contacts.

8. An application embodied on a computer readable medium and arranged to provide a known caller identification (Caller ID) of a calling party (101) to a called party (102) over a telecommunication network (160), the application being carried out by a call control node (110) of said telecommunication network, said call control node comprising a memory (115) for storing a list of contacts for said called party, each contact being associated with at least a Caller ID and a corresponding voice sample for said contact, the application comprising:
- instructions to intercept a first call from the calling party to the called party, when identifying that the called ID of the calling party does not belong to the list of contacts,
- instructions to prompt the calling party to provide a voice sample,
- instructions to record the voice sample,
- instructions to search in the stored list of contacts a voice sample of a first contact that matches the recorded voice sample,
- instructions to process a second call to the second party when a voice sample of a first contact matches the recorded voice sample, using for said second call the Caller ID of said first contact,
- instructions to join the first and second calls to generate a call between the calling party to the called party, thereby providing to said calling end point a Caller ID known from its list of contacts.

9. The application of claim 8 further comprising:
- instructions to process the first call when identifying that the called ID of the calling party corresponds to a second contact of the list of contacts,
- instructions to record a voice sample from the calling party during the first call if no voice sample is stored in the list of contacts for said second contact,
- instructions to store the recorded voice sample in association with the second contact in the list of contacts,

10. The application of claim 8 further comprising instructions to receive the list of contacts from the called party.
